# EUROPÄISCHE PATENTSCHRIFT

(11) **EP 1 713 669 B1**
(45) Veröffentlichungstag und Bekanntmachung des Hinweises auf die Patenterteilung: **21.10.2009**
(21) Anmeldenummer: 04821237.7
(22) Anmeldetag: 01.12.2004
(51) Int. Cl.: B60S 1/04

(54) **SCHEIBENWISCHVORRICHTUNG, INSBESONDERE FÜR EIN KRAFTFAHRZEUG**
WINDOW WIPING DEVICE, PARTICULARLY FOR A MOTOR VEHICLE
DISPOSITIF D'ESSUIE-GLACE, EN PARTICULIER POUR VEHICULE A MOTEUR

(30) Priorität: 02.02.2004 DE 102004005067
(43) Veröffentlichungstag der Anmeldung: 25.10.2006
(73) Patentinhaber: ROBERT BOSCH GMBH, 70442 Stuttgart (DE)
(72) Erfinder: ALBRECHT, Gerard, F-67690 Hatten (FR); BOHN, Roland, 77815 Buehl (DE); SCHABANEL, Francois, F-94100 Saint Maux des Fossés (FR); RITT, Jean-Marc, F-67000 Strasbourg (FR)
(86) Internationale Anmeldenummer: PCT/EP2004/053208
(87) Internationale Veröffentlichungsnummer: WO 2005/073039

(56) Entgegenhaltungen:
- WO-A-20/04065186
- WO-A-20/04089707
- FR-A- 2 842 154

## Beschreibung

### Stand der Technik

Die Erfindung betrifft eine Scheibenwischvorrichtung, insbesondere für ein Kraftfahrzeug, nach dem Oberbegriff von Anspruch 1.

Es sind schon zahlreiche Scheibenwischvorrichtungen für Kraftfahrzeuge bekannt, die ein Antriebselement aufweisen, das an der Karosserie des Kraftfahrzeugs befestigt ist. Typischerweise werden derartige Antriebselemente an der Karosserie festgeschraubt, was jedoch sehr aufwändig ist und viele Teile, wie Schrauben, Schraubenmuttern und Unterlegscheiben usw. benötigt. Dies ist logistisch aufwändig und darüber hinaus komplex beim Einbau. Weiterhin ist aus der DE 100 62 617 A1 eine Scheibenwischvorrichtung bekannt, die in das Kraftfahrzeug eingeklebt ist, wobei der Klebstoff dämpfende Eigenschaften aufweist.

Aus der DE 198 33 404 A1 ist eine Scheibenwischanlage für Fahrzeuge, insbesondere Kraftfahrzeuge, bekannt, die eine verschraubungsfreie und damit einfach und schnell durchzuführende Montage ermöglicht. Hierzu weist die Scheibenwischanlage eine Tragkonstruktion für eine Antriebsvorrichtung auf. An der Tragkonstruktion ist eine Anzahl erster Befestigungselemente vorgesehen, die in eine erste Richtung von der Tragkonstruktion abragen. In eine zweite Richtung, die in einem Winkel zwischen 45 und 135 Grad zu der ersten Richtung verläuft, vorzugsweise in einem Winkel von 90 Grad, ragen eine Anzahl zweiter Befestigungsglieder. Die Befestigungsglieder sind als zylindrische Steckzapfen ausgebildet, die mit einem Ende mit der Tragkonstruktion verbunden sind und mit ihrem freien Ende in eine Aufnahmeöffnung eines gummielastischen Dämpfungselements gesteckt werden. Dieses ist in eine Montageöffnung der Fahrzeugkarosserie eingesetzt. Die Montageöffnung kann sich in einer abgewinkelten oder tief gezogenen Lasche befinden, die an der Fahrzeugkarosserie angeschweißt ist. Das freie Ende des Steckzapfens kann eine vorzugsweise konische Verdikkung besitzen, um dasselbe in dem Dämpfungselement durch Verrasten festlegen zu können. Da die Montagerichtungen der ersten und zweiten Befestigungselemente unter einem Winkel verlaufen, ist es nicht ausgeschlossen, dass die Tragkonstruktion nach der Montage unter einer Spannung steht, die sich auf die angrenzenden Karosserieteile überträgt.

Aus der FR A 2 842 154 ist eine Scheibenwischvorrichtung mit einem Antriebselement und einer Abtriebswelle bekannt, bei der zylindrische Zapfen vorgesehen sind, die eine zur Abtriebswelle im Wesentlichen quer verlaufende Schwenkachse bilden. Die Zapfen passen in zylindrische Aufnahmen am Kraftfahrzeug, deren Montageöffnungen etwa parallel zur Montageplatte der Fahrzeugkarosserie verlaufen, sodass die Aufnahmen den Abstand zwischen der Fahrzeugkarosserie bzw. einer damit verbundenen Fahrzeugscheibe bestimmen. Die Zapfen werden durch eine Bewegung parallel zur Montageplatte der Fahrzeugkarosserie in die Aufnahmen eingeklippst. Dabei wird die im Wesentlichen quer zur Montagerichtung verlaufende Abtriebswelle in eine Montageöffnung des Montagebereichs der Fahrzeugkarosserie eingefädelt, indem je nach Länge der Abtriebswelle und der Größe der Montageöffnung das Antriebselement mehr oder weniger um die Schwenkachse geschwenkt werden kann. Dadurch ist die Länge der Abtriebswelle durch die Größe der Montageöffnung begrenzt. Bei der Schwenkbewegung wird ein Kugelzapfen im Wesentlichen in Richtung der Abtriebswelle in eine Aufnahme an der Fahrzeugkarosserie gedrückt, wobei das Material der Aufnahme sich entsprechend verformen kann.

In einer älteren Anmeldung, der WO 2004/089707 A (Art. 54(3) EPÜ), ist eine gattungsgemäße Scheibenwischvorrichtung für ein Kraftfahrzeug bekannt. Ein Antriebselement mit einer Abtriebswelle besitzt an radial gerichteten Fingern gemäß eines Ausführungsbeispiels Befestigungselemente, die in Längsrichtung der Abtriebswelle gerichtet sind. Im Zuge der Montage wird das Antriebselement mit der Abtriebswelle in eine Montageöffnung der Karosserie bzw. einer Heckscheibe des Kraftfahrzeugs geschoben, während die Befestigungselemente in entsprechende Montageöffnungen der Karosserie geschoben werden. Durch eine Drehbewegung des Antriebselements in einer zweiten Montagerichtung um die Abtriebswelle oder eine hierzu parallel verlaufende Achse greift der Rand der Montageöffnung in eine Nut am Umfang des jeweiligen Befestigungselements, wodurch das Antriebselement in Richtung der ersten Montagerichtung in Längsrichtung der Abtriebswelle fixiert ist. Da das Kraftfahrzeug sowie das Antriebselement Vibrationen erzeugen, sind zwischen dem Antriebselement und der Karosserie bzw. der Heckscheibe Stoßdämpferelemente aus natürlichem oder künstlichem Kautschuk geschaltet. So kann jeder radiale Finger in Form einer Muffe oder einer Hülse aus elastisch verformbarem Material nach Art eines Silentblocks aus natürlichem oder synthetischem Kautschuk oder aus Elastomermaterial realisiert werden.

### Vorteile der Erfindung

Nach der Erfindung ist das Befestigungselement in einer ersten Montagerichtung, die in Längsrichtung der Abtriebswelle verläuft, in eine als Aufnahme dienende Montageöffnung der Karosserie geschoben. In einer zweiten Montagerichtung, die in Umfangsrichtung der Drehung verläuft, um die das Antriebselement bei der Montage gedreht wird, kann es in der Montageöffnung verriegelt werden, sodass es nicht mehr aus der Montageöffnung heraus gezogen werden kann. Hierzu weist das Befestigungselement ein u-förmiges Querschnittprofil auf, das in der zweiten Montagerichtung offen und in das ein Dämpfungselement eingesetzt ist. Dieses besitzt einen zur offenen Seite hin ebenfalls offenen Schlitz, der über den Rand der Montageöffnung geschoben werden kann. Somit können alle derartigen Befestigungsstellen mit einer Drehbewegung des Antriebselements montiert werden, die auf einem oder mehreren konzentrischen Kreisen um die Drehachse liegen. Diese liegt in vorteilhafter Weise koaxial oder achsparallel zur Abtriebswelle. Ein unbeabsichtigtes Lösen der Befestigungsstellen wird durch das Arretierungselement verhindert. Ferner ist es möglich, die Befestigungselemente so anzuordnen, dass die Schwerkraft des Antriebselements die Befestigungselemente gegen den Rand der Montageöffnung drückt.

Zur leichteren Montage der Scheibenwischvorrichtung ist es vorteilhaft, dass das Befestigungselement eine Führungsfläche aufweist, mit der es während der Montage in der ersten Montagerichtung an einem Rand der Montageöffnung entlang gleiten kann und dadurch geführt wird. Dabei kann gemäß einer weiteren Ausgestaltung der Erfindung das Befestigungselement einen Anschlag besitzen, der die Montagebewegung in der ersten Montagerichtung begrenzt. Besonders vorteilhaft ist es hierbei, wenn die Befestigungselemente im Wesentlichen auf einem gemeinsamen Kreis angeordnet sind. Auf diese Weise ist es besonders einfach, das Antriebselement an der Karosserie anzusetzen und durch eine einfache Drehbewegung im Kraftfahrzeug zu befestigen.

Grundsätzlich ist es ausreichend, dass die Montageöffnung in eine ebene Wand der Fahrzeugkarosserie gestanzt ist. Um eine formsteifere Anbindung der Scheibenwischvorrichtung an die Fahrzeugkarosserie zu erhalten und einen Freiraum für das Antriebselement zu schaffen, ist es zweckmäßig, die Montageöffnung in einer tief gezogenen Mulde der Karosserie vorzusehen. Ferner kann die Montageöffnung auch in einem entsprechend gestalteten Blechteil angeordnet werden, das mit der Fahrzeugkarosserie verschweißt wird.

In einer Variation ist es vorteilhaft, das Arretierungselement als Schweiß- oder Klebestelle auszubilden. Auf diese Weise kann beispielsweise mittels einer stoffschlüssigen Verbindung ein optimaler Halt der Antriebsvorrichtung im Kraftfahrzeug erzielt werden.

Zeichnungen

Ausführungsbeispiele der Erfindung sind in den Zeichnungen dargestellt und in der nachfolgenden Beschreibung näher erläutert.

Es zeigen:
Fig. 1 eine Antriebsvorrichtung einer Scheibenwischvorrichtung in einer schematischen Darstellung, die nicht in den Schutzbereich fällt,
Fig. 2 einen Schnitt durch eine Befestigungsstelle einer Antriebsvorrichtung entsprechend der Linie II-II in Fig. 1,
Fig. 3 eine erfindungsgemäße Variante zu Fig. 1 und
Fig. 4 bis Fig. 7 Schritte eines Fertigungs- und Montageablaufs einer Befestigungsstelle nach Fig. 3.

### Beschreibung, der Ausführungsbeispiele

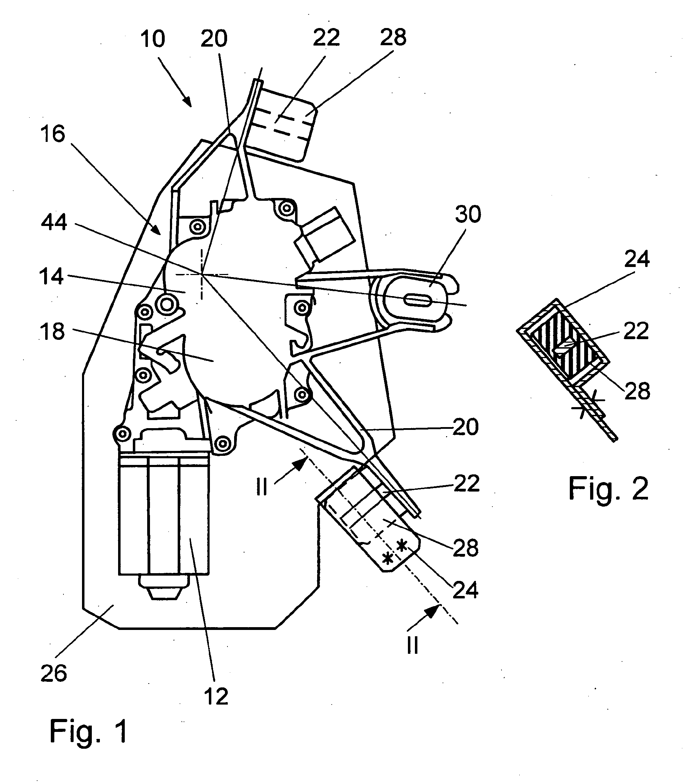

In Fig. 1 ist eine Scheibenwischvorrichtung 10 eines Heckscheibenwischers eines Kraftfahrzeugs in einer schematischen Darstellung gezeigt. Natürlich ist die Erfindung in keiner Weise auf Heckscheibenwischer beschränkt und problemlos auf Frontscheibenwischer anwendbar. Die Scheibenwischvorrichtung 10 umfasst einen Elektromotor 12 mit einem Getriebe 14, die zusammen ein Antriebselement 16 bilden. Das Antriebselement 16 weist ein Gehäuse 18 auf, das teilweise aus gegossenem Material ist und von dem aus sich Befestigungsarme 20 radial erstrecken, an deren Enden jeweils ein Befestigungselement 22 angeordnet ist. Die Befestigungselemente 22 sind hier als quaderförmige Stäbe ausgebildet, die sich senkrecht zur radialen Richtung der Längserstreckung der Befestigungsarme 20 erstrecken. Natürlich können die Befestigungselemente 22 auch anders ausgebildet sein. So sind beispielsweise auch zylindrische oder elliptische Befestigungselemente 22 denkbar. Weiterhin sind die Befestigungselemente 22 derart angeordnet, dass sie in ihrer Längserstreckung auf Tangenten eines Kreises liegen, dessen Mittelpunkt zweckmäßigerweise auf der Drehachse einer Abtriebswelle 44 oder einer dazu parallelen Achse liegt. Die Befestigungselemente 22 sind in taschenartige Aufnahmen 24 eingesteckt, die in der Karosserie 26 des Kraftfahrzeugs gebildet sind. Zur Schwingungsdämpfung sind in die Aufnahmen 24 Dämpfungselemente 28 eingesetzt.

Durch die tangentiale Anordnung der Befestigungselemente 22 kann das Antriebselement 16 durch eine Drehbewegung um eine zur Abtriebswelle 44 oder um eine zu dieser parallelen Achse gedreht werden. Fixiert wird das Antriebselement 16 durch ein Arretierungselement 30, welches durch eine maulartige Aufnahme für eine Schraube oder einen Niet als Arretierungselement 30 gebildet ist. Sinnvollerweise soll das Zentrum des Kreises, auf dessen Tangenten die Befestigungselemente 22 angeordnet sind, nicht im Bereich des Arretierungselements 30 liegen.

In Fig. 2 ist ein Schnitt durch eine Aufnahme 24 mit dem Befestigungselement 22 und dem Dämpfungselement 28 gezeigt. Im Zentrum der Aufnahme 24 sitzt das quaderförmige Befestigungselement 22, welches vom Dämpfungselement 28 umschlossen ist. Die Aufnahme 24 ist als Tasche einstückig aus einer Blechlasche der Fahrzeugkarosserie 26 ausgebildet und schlaufenartig gebogen. An der Zusammenführung der beiden Enden der Schlaufe sind diese zusammengeschweißt.

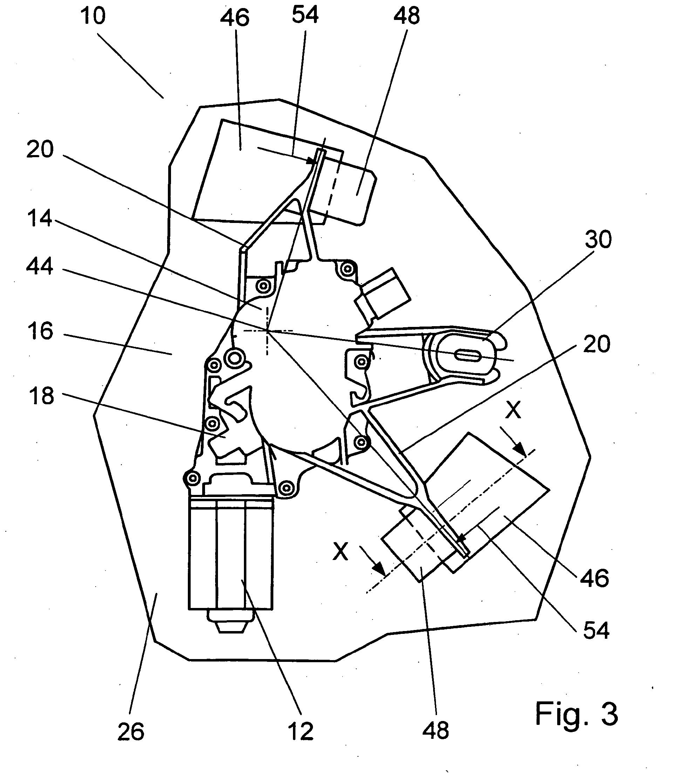

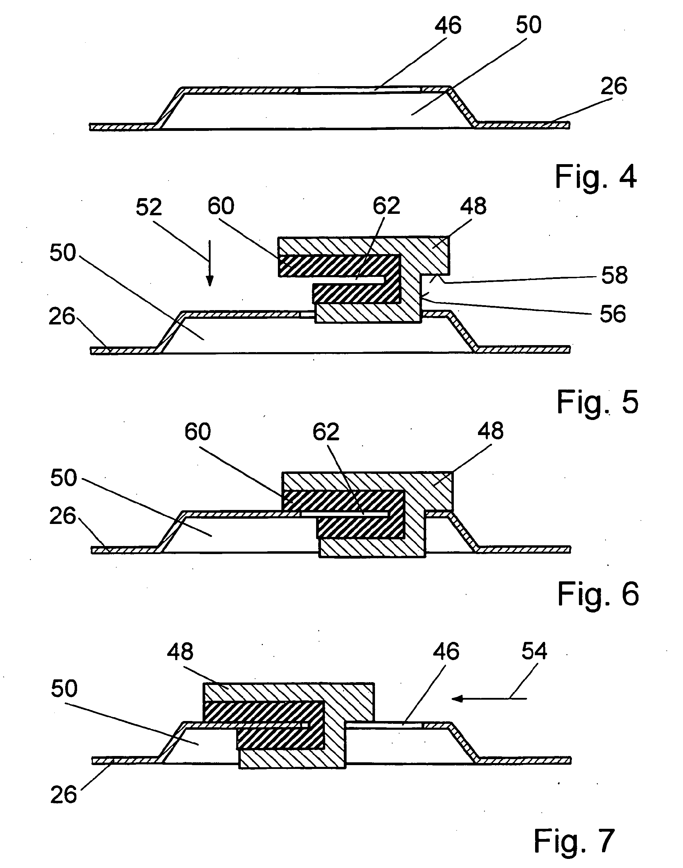

Bei der Ausführung nach Fig. 3 sind an den Befestigungsarmen 20 Befestigungselemente 48 befestigt oder einstückig angeformt. Sie besitzen einen vorstehenden Teil, mit dem sie durch eine Montageöffnung 46 in der Karosserie 26 in eine erste Montagerichtung 52 geschoben werden können (Fig. 5). Hierbei gleitet eine Führungsfläche 56 in vorteilhafter Weise an einem Rand der Montageöffnung 46 entlang, wobei die Montagebewegung in der ersten Montagerichtung 52 durch einen Anschlag 58 am Befestigungselement 48 begrenzt wird.

Das Befestigungselement 48 besitzt ein u-förmiges Querschnittprofil, das in einer zweiten Montagerichtung 54 offen ist, und in das ein Dämpfungselement 60 aus einem elastischen Werkstoff eingesetzt ist. Dieses weist einen zur offenen Seite hin ebenfalls offenen Schlitz 62 auf, in den der zugeordnete Rand der Montageöffnung 46 gleitet, wenn das Befestigungselement in die zweite Montagerichtung 54 bewegt wird.

Die Montageöffnung 46 wird in das Blech der Karosserie 26 gelocht, wobei es zweckmäßig ist, gleichzeitig eine Mulde 50 durch Tiefziehen vorzusehen. Dadurch entsteht auf der anderen Seite der Karosserie 26 eine entsprechende Erhebung, die einen Freiraum zwischen dem Antriebselement 16 und der Karosserie 26 schafft (Fig. 4). Außerdem wird die Karosserie 26 in dem Befestigungsbereich formsteifer. In die Montageöffnung 46 wird dann in Richtung 52 das Befestigungselement 48 geschoben (Fig. 5) bis es am Anschlag 58 anliegt (Fig. 6). In dieser Position liegt der Schlitz 62 dem Rand der Montageöffnung 46 gegenüber, der der Führungsfläche 56 abgewandt ist. Durch eine Drehung in die zweite Montagerichtung 54 schiebt sich das Befestigungselement 48 über den zugeordneten Rand der Montageöffnung 46, wobei sich das Dämpfungselement 60 unter einer Vorspannung an das Blech der Karosserie 26 anschließt (Fig. 7). An dieser Endlage wird das Arretierungselement 30 durch eine Schraube oder einen Niet fixiert.

## Patentansprüche

1. Scheibenwischvorrichtung (10), insbesondere für ein Kraftfahrzeug, mit mindestens einem am Kraftfahrzeug befestigbaren Antriebselement (16) mit einer Abtriebswelle (44) und mindestens zwei im Wesentlichen länglichen, axial starr angeordneten Befestigungselementen (48), die in Aufnahmen (46) des Kraftfahrzeugs einzugreifen vermögen und zumindest ein Dämpfungselement (60) zur Dämpfung mechanischer Schwingungen aufweisen, wobei die Befestigungselemente (48) derart angeordnet sind, dass sie in einer ersten Montagerichtung (52), die in Längsrichtung der Abtriebswelle (44) verläuft, in eine als Aufnahme dienende Montageöffnung (46) der Karosserie (26) geschoben und in einer zweiten Montagerichtung (54), die in Umfangsrichtung einer Drehung um die Abtriebswelle (44) oder um eine zu dieser im Wesentlichen parallelen Achse verläuft, verriegelt werden kann, wobei das Befestigungselement (48) ein u-förmiges Querschnittprofil aufweist, das in der zweiten Montagerichtung (54) offen und in das ein Dämpfungselement (60) eingesetzt ist, das einen zur offenen Seite hin ebenfalls offenen Schlitz (62) besitzt, der über den Rand der Montageöffnung (46) geschoben werden kann.

2. Scheibenwischvorrichtung (10) nach Anspruch 1, **dadurch gekennzeichnet, dass** das Befestigungselement (48) eine Führungsfläche (56) aufweist, mit der es während der Montage in der ersten Montagerichtung (52) an einem Rand der Montageöffnung (46) entlang gleiten kann.

3. Scheibenwischvorrichtung (10) nach einem der Ansprüche 1 oder 2, **dadurch gekennzeichnet, dass** das Befestigungselement (48) einen Anschlag (58) besitzt, der die Montagebewegung in der ersten Montagerichtung (52) begrenzt.

4. Scheibenwischvorrichtung (10) nach einem der vorhergehenden Ansprüche, **dadurch gekennzeichnet, dass** die Montageöffnung (46) in einer tiefgezogenen Mulde (50) der Karosserie (26) vorgesehen ist, wobei die Mulde (50) auf der anderen Seite der Karosserie (26) eine entsprechende Erhebung bildet, die einen Freiraum zwischen dem Antriebselement (16) und der Karosserie (26) schafft.

5. Scheibenwischvorrichtung (10) nach einem der vorhergehenden Ansprüche, **dadurch gekennzeichnet, dass** ein Arretierungselement (30) zur Fixierung des Antriebselements (16) vorgesehen ist, das als Schweiß- oder Klebestelle ausgebildet ist.

## Claims

1. Window wiping device (10), particularly for a motor vehicle, with at least one driving element (16) which can be fastened to the motor vehicle and has a driven shaft (44), and with at least two substantially elongate, axially rigidly arranged fastening elements (48) which are capable of engaging in receptacles (46) of the motor vehicle and have at least one damping element (60) for damping mechanical vibrations, wherein the fastening elements (48) are arranged in such a manner that they can be pushed in a first installation direction (52) which runs in the longitudinal direction of the driven shaft (44) into an installation opening (46) in the vehicle body (26), said installation opening serving as a receptacle, and they can be locked in a second installation direction (54) which runs in the circumferential direction of a rotation about the driven shaft (44) or about an axis which is substantially parallel thereto, wherein the fastening element (48) has a U-shaped cross-sectional profile which is open in the second installation direction (54) and into which a damping element (60) is inserted, said damping element having a slot (62) which is likewise open towards the open side and can be pushed over the edge of the installation opening (46).

2. Window wiping device (10) according to Claim 1, **characterized in that** the fastening element (48) has a guide surface (56) with which it can slide along an edge of the installation opening (46) during the installation in the first installation direction (52).

3. Window wiping device (10) according to either of Claims 1 and 2, **characterized in that** the fastening element (48) has a stop (58) which limits the installation movement in the first installation direction (52).

4. Window wiping device (10) according to one of the preceding claims, **characterized in that** the installation opening (46) is provided in a deep-drawn trough (50) in the vehicle body (26), the trough (50) on the other side of the vehicle body (26) forming a corresponding elevation which creates a clearance between the driving element (16) and the vehicle body (26).

5. Window wiping device (10) according to one of the preceding claims, **characterized in that** a locking element (30) designed as a welding or adhesive bonding point is provided for fixing the driving element (16) in place.

## Revendications

1. Dispositif d'essuie-glace (10), en particulier pour un véhicule automobile, avec au moins un élément d'entraînement (16) pouvant être fixé au véhicule automobile avec un arbre d'entraînement (44) et au moins deux éléments de fixation essentiellement allongés (48), disposés axialement de façon rigide, qui peuvent être engagés dans des logements (46) du véhicule automobile et qui présentent au moins un élément d'amortissement (60) pour amortir des vibrations mécaniques, dans lequel les éléments de fixation (48) sont disposés de telle manière q'ils puissent être verrouillés, dans une première direction de montage (52) qui est orientée dans la direction longitudinale de l'arbre d'entraînement (44), dans une ouverture de montage (46) de la carrosserie (26) servant de logement, et dans une deuxième direction de montage (54) qui est orientée dans la direction périphérique d'une rotation autour de l'arbre d'entraînement (44) ou autour d'un axe essentiellement parallèle à celui-ci, dans lequel l'élément de fixation (48) présente un profil transversal en forme de U, qui est ouvert dans la deuxième direction de montage (54) et dans lequel un élément d'amortissement (60) est introduit, qui comporte une fente (62) également ouverte vers le côté ouvert et qui peut être glissée sur le bord de l'ouverture de montage (46).

2. Dispositif d'essuie-glace (10) selon la revendication 1, **caractérisé en ce que** l'élément de fixation (48) présente une surface de guidage (56), avec laquelle il peut glisser le long d'un bord de l'ouverture de montage (46) dans la première direction de montage (52) pendant le montage.

3. Dispositif d'essuie-glace (10) selon l'une quelconque des revendications 1 ou 2, **caractérisé en ce que** l'élément de fixation (48) comporte une butée (58), qui limite le mouvement de montage dans la première direction de montage (52).

4. Dispositif d'essuie-glace (10) selon l'une quelconque des revendications précédentes, **caractérisé en ce que** l'ouverture de montage (46) est prévue dans une dépression emboutie (50) de la carrosserie (26), dans lequel la dépression (50) forme sur l'autre côté de la carrosserie (26) une protubérance correspondante, qui crée un espace libre entre l'élément d'entraînement (16) et la carrosserie (26).

5. Dispositif d'essuie-glace (10) selon l'une quelconque des revendications précédentes, **caractérisé en ce qu'**il est prévu un élément de blocage (30) pour la fixation de l'élément d'entraînement (16), qui se présente sous la forme d'un point soudé ou d'un point collé.
